# EUROPÄISCHE PATENTSCHRIFT

(11) **EP 1 361 647 B1**
(45) Veröffentlichungstag und Bekanntmachung des Hinweises auf die Patenterteilung: **15.03.2017**
(21) Anmeldenummer: 03405319.9
(22) Anmeldetag: 06.05.2003
(51) Int. Cl.: H02K 23/18

(54) **Kommutatorschwenkschalter**
Commutator rotary switch
Interrupteur rotatif de commutateur

(30) Priorität: 10.05.2002 DE 10220793
(43) Veröffentlichungstag der Anmeldung: 12.11.2003
(73) Patentinhaber: HILTI Aktiengesellschaft, 9494 Schaan (LI)
(72) Erfinder: Lübkert, Ernst-Rudolf, 86899 Landsberg (DE); Braml, Georg, 86899 Landsberg (DE)
(74) Vertreter: Hilti Aktiengesellschaft Corporate Intellectual Property

(56) Entgegenhaltungen:
- DE-A- 3 731 079
- US-A- 5 196 747
- US-A- 5 955 802

## Beschreibung

Die Erfindung bezeichnet einen drehverschwenkbaren Kommutatorschwenkschalter mit Kohleführungen zur Drehrichtungsumkehr für einen Universalelektromotor, vorzugsweise zum Einsatz in Handwerkzeugmaschinen.

Üblicherweise weist ein als drehverschwenkbarer Kommutatorschwenkschalter zur Drehrichtungsumkehr ausgebildeter drehverschwenkbarer Kohlehalter mit Kohleführungen zwei diametral gegenüberliegende Statorkontakte auf, welche diametral gegenüberliegende, jeweils teilweise umlaufende Kontaktschienen an je zwei Kontaktstellen kontaktieren, die mit den beiden diametral gegenüberliegenden Kohleführungen leitend verbunden sind. Somit wird beim Verschwenken des Kommutatorschwenkschalters einerseits durch den wechselweisen Kontakt der Kontaktstellen mit den Statorkontakten die Ankerwicklung umgepolt und andererseits die Kohleführung drehrichtungsabhängig aus der Polebene heraus drehverschwenkt. In der Erfindung wird sich auf derartige Kommutatorschwenkschalter beschränkt.

Nach der DE3731079 oder der DE3943651 weisen derartige Kommutatorschwenkschalter zwei diametral gegenüberliegende Statorkontakte auf, wodurch beidseitig Bauraum benötigt wird, welcher gerade bei Handwerkzeugmaschinen sehr knapp ist.

Nach der DE3744488 ist ein Schaltring für einen Universalelektromotor mit zwei separaten, diametral gegenüberliegenden Schaltbrückenkontakten versehen, über welche die festen Kohleführung zur Drehrichtungsumkehr schaltbar zu einem festen Stanzgitter kontaktieren, das mit beiden Statorkontakten an nur einer Seite des Stators verbunden ist. Durch die notwendig ortsfest mit dem Stanzgitter verbundenen und somit nicht drehrichtungsabhängig aus der Polebene heraus verdrehverschwenkbaren Kohleführung kommt es durch die Ankerrückwirkung bei hohen Belastungen zu starkem Bürstenfeuer, welches den Verschleiss der Kohlen erhöht. Zudem sind zusätzliche Zwischenleitungen zwischen den Statorkontakten und den Schaltbrückenkontakten notwendig, wodurch der Schaltring in sich mehrteilig ausgeführt, drehverschwenkbar sein muss.

Zudem sind nach der DE19521702 bei einer Niederspannungs-Gleichstrommaschine an einer festen Bürstenbrücke zwischen den Kohleführungen zwei teilweise umlaufende starre Polverbindungsleitungen angeordnet, wobei sich zumindest eine Polverbindungsleitung über einen halben Umfang erstreckt.

Die Aufgabe besteht in der Realisierung eines drehverschwenkbaren Kommutatorschwenkschalters mit Kohleführungen, welcher Bauraum einspart. Ein weiterer Aspekt der Erfindung besteht in der Realisierung eines einteiligen drehverschwenkbaren Kommutatorschwenkschalters mit weniger Bauteilen.

Die Aufgabe wird im wesentlichen durch die Merkmale des Anspruchs 1 gelöst. Vorteilhafte Weiterbildungen ergeben sich aus den Unteransprüchen.

Erfindungsgemäss weist ein drehverschwenkbarer Kommutatorschwenkschalter mit Kohleführungen zur Drehrichtungsumkehr zwei Statorkontakte auf, welche jeweils an zumindest einer Kontaktstelle teilweise umlaufende Kontaktschienen kontaktieren, die mit den beiden diametral gegenüberliegenden Kohleführungen leitend verbunden sind, wobei sich eine Kontaktschiene mit zwei Kontaktstellen über zumindest einen halben Umfang erstreckt und wobei beide Statorkontakte, denen an jeweils einer teilweise umlaufenden Kontaktschiene jeweils zumindest eine Kontaktstelle drehverschwenkbar schaltbar zuordenbar ist, an nur einer Seite des Stators angeordnet sind.

Durch die sich über einen halben Umfang erstreckende Kontaktschiene mit zwei Kontaktstellen sind die beiden auf nur einer Seite des Stators angeordneten Statorkontakte wechselseitig zuschaltbar, wobei drehrichtungsabhängig die Ankerwicklung sowohl umgepolt als auch der Kohleführung drehverschwenkt wird. Der somit freie Bauraum der anderen Seite des Stators steht somit für andere Baugruppen zur Verfügung.

Vorteilhaft weist eine Kontaktschiene genau eine, wechselweise beiden Statorkontakten zuschaltbare, Kontaktstelle auf, wodurch die Zuverlässigkeit erhöht wird.

Vorteilhaft sind die beiden Kontaktschienen radial beabstandet, in einer Ebene angeordnet, wodurch axial Bauraum einsparbar ist.

Vorteilhaft sind die Kontaktschienen als zumindest teilweise federnde Kontaktblattfedern ausgebildet, wodurch der Übergangskontaktwiderstand zum Statorkontakt verringert wird. Vorteilhaft ist der Kommutatorschwenkschalter einstückig ausgeführt und direkt am Universalmotor drehschwenkgelagert, wodurch zusätzliche Zwischenleitungen von den Statorkontakten zu den Kontaktschienen sowie Drehschwenklagerungen zwischen Teilen des Kommutatorschwenkschalters entbehrlich sind.

Vorteilhaft ist auf der den Statorkontakten gegenüberliegenden Längsseite des Stators der Stromversorgungsanschluss des Universalmotors angeordnet, wodurch der eingesparte Bauraum geeignet nutzbar ist.

Die Erfindung wird bezüglich eines vorteilhaften Ausführungsbeispiels näher erläutert mit einer Darstellung eines Kommutatorschwenkschalters.

Nach der Darstellung weist ein virtuell dargestellter drehverschwenkbarer Kommutatorschwenkschalter 1 mit Kohleführungen 2 zur Drehrichtungsumkehr eines kommutatorseitig offen dargestellten Universalmotors zwei Statorkontakte 3a, 3b auf. Die Statorkontakte 3a, 3b kontaktieren jeweils an zumindest einer Kontaktstelle 4a, 4b, 4c teilweise umlaufende dargestellte Kontaktschienen 5a, 5b in Form von teilweise federnden Kontaktblattfedern, die mit den beiden diametral gegenüberliegenden Kohleführungen 2 leitend verbunden sind. Eine Kontaktschiene 5a erstreckt sich mit zwei Kontaktstellen 4a, 4b über einen halben Umfang von ca. 300°. Die andere Kontaktschiene 5b weist genau eine, wechselweise beiden Statorkontakten 3a, 3b zuschaltbare, Kontaktstelle 4c auf. Beide Kontaktschienen 5a, 5b sind radial beabstandet und axial in einer Ebene angeordnet. Beide Statorkontakte 3a, 3b, denen an jeweils einer teilweise umlaufenden Kontaktschiene 5a, 5b jeweils zumindest eine Kontaktstelle 4a, 4b, 4c drehverschwenkbar schaltbar zuordenbar ist, sind an nur einer Seite des Stators 6 angeordnet. Auf der den Statorkontakten 3a, 3b gegenüberliegenden Längsseite des Stators 6 ist in Form einer Steckbuchse der Stromversorgungsanschluss 7 des Universalmotors angeordnet. Der direkt am Universalmotor drehschwenkgelagerte Kommutatorschwenkschalter 1 ist einteilig ausgeführt. Zusätzliche Zwischenleitungen zwischen den Statorkontakten 3a, 3b und den Kontaktschienen 5a, 5b sind nicht vorhanden, da die Kontaktstellen der Kontaktschienen 4a, 4b, 4c direkt den Positionen der Statorkontakte 3a, 3b zugeordnet sind.

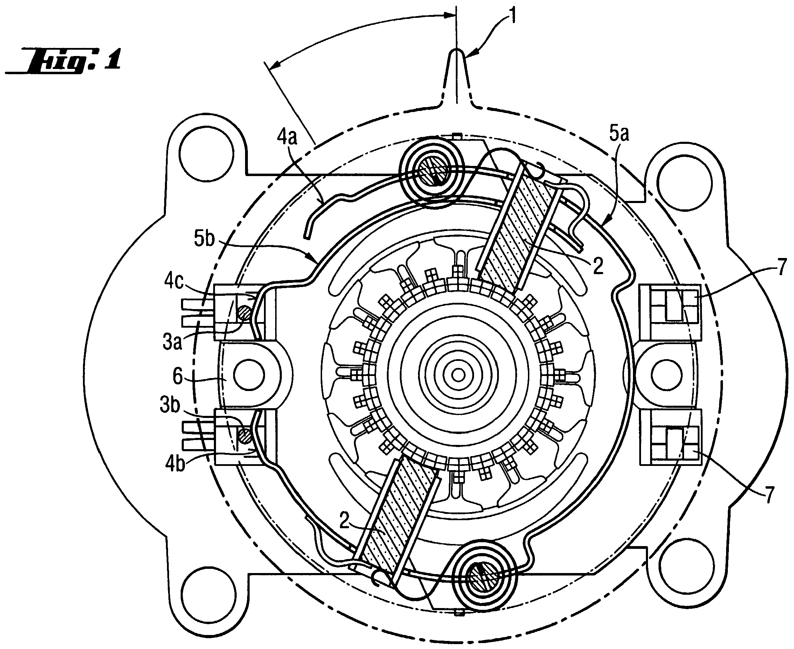

## Patentansprüche

1. Drehverschwenkbarer Kommutatorschwenkschalter mit Kohleführungen (2) zur Drehrichtungsumkehr eines Universalmotors, welcher zwei Statorkontakte (3a, 3b) aufweist, welche jeweils an zumindest einer Kontaktstelle (4a, 4b, 4c) teilweise umlaufende Kontaktschienen (5a, 5b) kontaktieren, die mit den beiden diametral gegenüberliegenden Kohleführungen (2) leitend verbunden sind, **dadurch gekennzeichnet, dass** sich eine Kontaktschiene (5a) mit zwei Kontaktstellen (4a, 4b) über zumindest einen halben Umfang erstreckt und wobei beide Statorkontakte (3a, 3b), denen an jeweils einer teilweise umlaufenden Kontaktschiene (5a, 5b) jeweils zumindest eine Kontaktstelle (4a, 4b, 4c) drehverschwenkbar schaltbar zuordenbar ist, an nur einer Seite des Stators (6) angeordnet sind.

2. Kommutatorschwenkschalter nach Anspruch 1, **dadurch gekennzeichnet, dass** eine Kontaktschiene (5b) genau eine, wechselweise beiden Statorkontakten (3a, 3b) zuschaltbare, Kontaktstelle aufweist.

3. Kommutatorschwenkschalter nach Anspruch 1 oder 2, **dadurch gekennzeichnet, dass** die beiden Kontaktschienen (5a, 5b) radial beabstandet, in einer Ebene angeordnet sind.

4. Kommutatorschwenkschalter nach einem der vorherigen Ansprüche, **dadurch gekennzeichnet, dass** die Kontaktschienen (5a, 5b) als zumindest teilweise federnde Kontaktblattfedern ausgebildet sind.

5. Kommutatorschwenkschalter nach einem der vorherigen Ansprüche, **dadurch gekennzeichnet, dass** dieser einstückig ausgeführt ist

6. Kommutatorschwenkschalter nach Anspruch 5, **dadurch gekennzeichnet, dass** dieser direkt am Universalmotor drehschwenkgelagert ist.

7. Kommutatorschwenkschalter nach einem der vorherigen Ansprüche, **dadurch gekennzeichnet, dass** auf der den Statorkontakten (3a, 3b) gegenüberliegenden Längsseite des Stators (6) der Stromversorgungsanschluss (7) des Universalmotors angeordnet ist.

## Claims

1. Commutator rotary switch that may pivot rotationally with carbon guides (2) for reversing the direction of rotation of a universal motor, which has two stator contacts (3a, 3b), which at least at one contact point (4a, 4b, 4c) contact partially circulating contact rails (5a, 5b), which are connected conductively to both carbon guides (2) lying diametrically opposite each other, **characterised in that** a contact rail (5a) with two contact points (4a, 4b) extends over at least half the circumference and in which both stator contacts (3a, 3b), to which at least on one partially circulating contact rail (5a, 5b) at least one contact point (4a, 4b, 4c) may be allocated so that it may switch and pivot rotationally, are arranged on only one side of the stator (6).

2. Commutator rotary switch according to claim 1, **characterised in that** a contact rail (5b) has just one contact point that may switch both stator contacts (3a, 3b) alternately.

3. Commutator rotary switch according to claim 1 or 2, **characterised in that** both contact rails (5a, 5b) are arranged on a plane radially at a distance.

4. Commutator rotary switch according to one of the previous claims, **characterised in that** the contact rails (5a, 5b) are made as at least partially flexible contact leaf springs.

5. Commutator rotary switch according to one of the previous claims, **characterised in that** it is made in one piece.

6. Commutator rotary switch according to claim 5, **characterised in that** it is mounted directly on the universal motor so that it may pivot rotationally.

7. Commutator rotary switch according to one of the previous claims, **characterised in that** the power supply connection (7) of the universal motor is arranged on the long side of the stator (6) lying opposite the stator contacts (3a, 3b).

## Revendications

1. Interrupteur pivotant de commutateur pouvant pivoter en rotation avec des systèmes de guidage de charbon (2) servant à inverser la direction de rotation d'un moteur universel, lequel présente deux contacts de stator (3a, 3b), qui établissent un contact, respectivement au niveau au moins d'un point de contact (4a, 4b, 4c), avec des rails de contact (5a, 5b) tournant en partie, lesquels sont reliés de manière conductrice aux deux systèmes de guidage de charbon (2) diamétralement opposés, **caractérisé en ce qu'**un rail de contact (5a) avec deux points de contact (4a, 4b) s'étend sur au moins une moitié de la périphérie, et dans lequel les deux contacts de stator (3a, 3b), auxquels respectivement au moins un point de contact (4a, 4b, 4c) peut être associé de manière à pouvoir être commuté par pivotement en rotation au niveau respectivement d'un rail de contact (5a, 5b) tournant en partie, sont disposés au niveau seulement d'un côté du stator (6).

2. Interrupteur pivotant de commutateur selon la revendication 1, **caractérisé en ce qu'**un rail de contact (5b) présente précisément un point de contact pouvant activer en alternance les deux contacts de stator (3a, 3b).

3. Interrupteur pivotant de commutateur selon la revendication 1 ou 2, **caractérisé en ce que** les deux rails de contact (5a, 5b) sont disposés dans un plan de manière espacée radialement.

4. Interrupteur pivotant de commutateur selon l'une quelconque des revendications précédentes, **caractérisé en ce que** les rails de contact (5a, 5b) sont configurés sous la forme de ressorts à lames de contact au moins en partie élastiques.

5. Interrupteur pivotant de commutateur selon l'une quelconque des revendications précédentes, **caractérisé en ce que** ce dernier est réalisé d'un seul tenant.

6. Interrupteur pivotant de commutateur selon la revendication 5, **caractérisé en ce que** ce dernier est monté de manière à pivoter en rotation directement au niveau du moteur universel.

7. Interrupteur pivotant de commutateur selon l'une quelconque des revendications précédentes, **caractérisé en ce que** le raccord d'alimentation en courant (7) du moteur universel est disposé sur le côté longitudinal, opposé aux contacts de stator (3a, 3b), du stator (6).
